# EUROPEAN PATENT APPLICATION

(11) **EP 2 328 067 A1**
(43) Date of publication of application: **01.06.2011**
(21) Application number: 09177322.6
(22) Date of filing: 27.11.2009
(51) Int. Cl.: G06F 3/048, G06F 17/30

(54) **Navigating and accessing large sets of data**

(71) Applicant: Deutsche Telekom AG, 53113 Bonn (DE); Technische Universität Berlin, 10623 Berlin (DE)
(72) Inventor: Rath, Matthias, 10587 Berlin (DE); Wechsung, Ina, 10588 Berlin (DE)
(74) Representative: Vossius & Partner

(57) **Abstract**

A method for navigating and accessing a set of data being stored in a memory of an electronic device (79) which has a screen (719) and a control unit (719), comprises the steps of: obtaining sorted groups of the set of data according to a predefined criteria; providing a virtual rotatable view (1; 10; 19) having the groups arranged around its center (5; 50; 59) and having the single data arranged along its periphery (90; 99) in correspondence with the groups; displaying a section of the virtual rotatable view (1; 10; 19) near its center (5; 50; 59) on the screen (719) wherein at least one group is visible on the screen (719); turning the virtual rotatable view (1; 10; 19) when a predefined turn signal is detected on the control unit (719); and sliding the virtual rotatable view (1; 10; 19) into a peripheral direction to display single data of the set of data. Such a method allows for a comparably fast and efficient navigation of the data set and also for conveniently processing large data sets. Further, the it also allows supporting automatic zooming, manual zooming as well as combinations of manual and automatic zooming. Thereby, a user may directly control only the turning movement (whether by means of a touch sensitive display, direction buttons or whatever other control unit) and the sliding rotatable view position (thus the zoom level) is adjusted automatically to a suitable level of detail. Still further, the method also allows preventing a user loosing feel for the current level of detail.

## Description

### Technical Field

The present invention relates to a method for navigating and accessing a set of data according to the preamble of independent claim 1 and more particularly to a computer program and an electronic device. Such methods, e.g. implemented by a computer program or implemented in an electronic device, can be used for navigating and accessing a set of data being stored in a memory of an electronic device which has a screen and a control unit.

### Background Art

Due to the possibility to store enormous amounts of data in commonly used electronic digital devices such as home computers or home entertainment systems and even in such devices of small and portable size such as notebooks, mobile phones or media players, a general challenge lies in the development of user interfaces which allow a human user to navigate through large data sets and search, find and select items or parts thereof. In the general situation, at any moment during the process of navigation a certain comparatively small number of items from a data set or of categories covering subsets of the data set is visible on a screen. A user navigates by shifting, specifying or narrowing the graphically represented section of the data set until a desired element can be selected. The process of navigation is being performed by means of input control units specific to the used device and situation. For example, such control units can be an alpha-numeric keyboard, push buttons or a touch sensitive screen. Common examples of the described navigation and access include, e.g., the exploration and selection of contacts in a digitally stored address book, of songs in a music collection on a portable media player or of film titles in a collection of available items in a home entertainment system.

Several general metaphors are today being used for the above-described task, each with specific advantages and disadvantages and more or less suitable for certain exact attributes and dimensions of the concrete appearance of the data to be navigated and device in use.

In one example, menu structures such as, e.g., drop down menus in a computer desktop environment can naturally reflect a hierarchical categorization of data. However, they tend to become inconvenient or even unpractical for large data sets. Also, menu structures usually include explicit steps of hierarchy levels which does not support seamless navigation.

Another example, which is the common window metaphor used with computer desktop environments, often provides the feature of a scroll or navigation bar when a large data set is displayed. This technique allows navigation without any steps in hierarchy level to appear in the display. However, the occupation of display space for the navigation element itself, i.e. the scroll bar, is particularly disadvantageous for situations of small screen space. Moreover, combining the precision of navigation and the number of control elements such as, e.g. page up/down-buttons or home/end-buttons for large data sets is difficult.

In another example, a generic search mask is generally an option for navigating sets of alpha-numeric entries which is a common case. However, this technique naturally needs some kind of alpha-numeric keyboard which may be problematic to implement for small, portable devices and is hardly compatible with uncomplicated one-hand operation.

In other methods, scrolling and zooming are controlled in parallel by control movements along independent axes. As, e.g. described in "Appert, C. and Fekete, J. 2006. OrthoZoom scroller: 1D multi-scale navigation. In Proceedings of the SIGCHI Conference on Human Factors in Computing Systems (Montréal, Quebec, Canada, April 22 - 27, 2006). R. Grinter, T. Rodden, P. Aoki, E. Cutrell, R. Jeffries, and G. Olson, Eds. CHI '06. ACM, New York, NY, 21-30. DOI= http://doi.acm.org/10.1145/1124772.1124776" OrthoZoom exploits this principle for the navigation of one-dimensional data sets. Further, as described in "Ramos, G. and Balakrishnan, R. 2005. Zliding: fluid zooming and sliding for high precision parameter manipulation. In Proceedings of the 18th Annual ACM Symposium on User interface Software and Technology (Seattle, WA, USA, October 23 - 26, 2005). UIST '05. ACM, New York, NY, 143-152. DOI= http://doi.acm.org/10.1145/1095034.1095059" in the Zliding technique an additional sensor, e.g. a pressure sensor attached to the device, is used to control the zoom level at which a data set is displayed and explored. As with the techniques mentioned before, the necessary coordinated control movements can hardly be performed with a device held and controlled by one hand.

Therefore, there is a need for a method or system allowing convenient and efficient navigation and access of large data sets even under comparably restricted conditions such as, e.g., restricted screen size and/or one hand control.

### Disclosure of the Invention

According to the invention this need is settled by a method as it is defined by the features of independent claim 1, by a computer program as it is defined by the features of independent claim 11 and by an electronic device as it is defined by independent claim 12. Preferred embodiments are subject of the dependent claims.

In particular, the invention with a method for navigating and accessing a set of data being stored in a memory of an electronic device which has a screen and a control unit. The method is characterized by the steps of: obtaining sorted groups of the set of data according to a predefined criteria; providing a virtual rotatable view having the groups arranged around its center and having the single data arranged along its periphery in correspondence with the groups; displaying a section of the virtual rotatable view near its center on the screen wherein at least one group is visible on the screen; turning the virtual rotatable view when a predefined turn signal is detected on the control unit; and sliding the virtual rotatable view into a peripheral direction to display single data of the set of data when a predefined slide signal is detected on the control unit. Thereby, the virtual rotatable view preferably is a virtual circular disk or a virtual helix. Further, the sliding of the virtual rotatable view into a peripheral direction preferably is inducible by a predefined slide signal being detected on the control unit.

In the context of the invention, electronic device relates to any electronic or digital devices on which the invention can be carried out, such as for example personal computers, home entertainment systems, mobile phones, person digital assistants (PDA), laptop computers, media players or the like. Screen relates to any output unit being arranged for visually displaying information such as external computer displays (LCD or CRT), integrated displays (LCD or LED), televisions or the like. Control unit relates to any unit suitable to input a predefined signal such as internal or external keyboards, internal or external joysticks, single or groups of buttons, remote controls, physical control dials, gesture control through accelerometers, motion sensors, mice, trackballs or touch sensitive screens. Memory relates to any memory means of the electronic device allowing storing of the set of data, such as e.g. random access memory (RAM), read only memory (ROM), hard disk memory or the like. Virtual rotatable view relates to plane structures either being wound in a winding stairs fashion, i.e. the virtual helix, or being a flat circular disk, i.e. the virtual circular disk. The center of the virtual rotatable view corresponds to its rotational axis, i.e. either to a central axis around which the plane structure of the virtual helix is wound or to a central point of the flat virtual circular disk. The periphery of the virtual rotatable view corresponds either to the outer borderline of the plane structure of the virtual helix or to the outer border line of the flat virtual circular disk. Correspondingly, peripheral direction relates to a direction from the center to the periphery.

The step of obtaining the sorted groups of the set of data can be performed for example by taking over pre-sorted and/or pre-grouped data of the set of data such as data being sorted and/or grouped by other processes outside of the method according to the invention. Or it can be performed for example by sorting and/or grouping the data within the method according to the invention. The predefined criteria can be for example a numerical criteria such as sorting numerical data regarding the size or a letter criteria such as sorting terms alphabetically or any suitable other sorting and grouping criteria.

One central idea of the method according to the invention is to display a linear distribution of data - most typically a list of items, but the method also works for a continuous data set, such as an interval of real numbers - in a rotational, angular fashion. Thereby, via the virtual rotatable view a "sliding wheel"-interface can be implemented as user interface for the interaction between the electronic device and a user of it. The method according to the invention or the "sliding wheel"-metaphor, respectively, allows for navigation through a data set by providing a turning movement of the virtual rotatable view or the sliding wheel, respectively, containing the groups and data of the data set by the predefined turn signal and zooming by the predefined slide signal with regard to the visible window. Preferably, the rotational movement of the virtual rotatable view can be induced in both directions, one direction induced by the predefined turn signal and the opposite direction induced by a second predefined turn signal. Likewise, the sliding movement of the virtual rotatable view can preferably also be induced in both directions, one direction induced by the predefined slide signal and the opposite direction induced by a second predefined slide signal.

Thus, the method according to the invention allows for a comparably fast and efficient navigation of the data set and also for conveniently processing large data sets. Further, the method according to the invention also allows supporting automatic zooming, manual zooming as well as combinations of manual and automatic zooming. For purely automatic zooming, a user may directly control only the turning movement (whether by means of a touch sensitive display, direction buttons or whatever other control unit) and the sliding position of the rotatable view, i.e. the zoom level, is adjusted automatically to a suitable level of detail. Still further, the method according to the invention also allows preventing a user loosing feel for the current level of detail: one advantage of the rotatable view and its display on a screen lies in the fact that the momentary zoom level is reflected in the mutual angles of locally visible data slices. Estimation of momentary zoom level may further be improved by an acoustical feedback. As, e.g., compared to the techniques of OrthoZoom and Zliding mentioned above the method according to the invention has the advantage that scrolling and zooming are both achieved by exploiting one physical-geometrical basic element consisting of a rotatable view containing hierarchically structured data a and movable window. This unique and simple metaphor may support an intuitive and aesthetic quality of the process of data navigation that is not achieved with existing approaches.

Data display based on the method according to the invention or the sliding wheel metaphor, respectively, may be combined with a wide range of control input techniques as control units: In one example, a configuration of four direction buttons, "up/down/left/right", as contained in many existing user interfaces such as remote controls or computer keyboards can be used for controlling the virtual rotatable view. The "up/down" buttons may control the turning movement clockwise respectively counter clockwise and the "left/right" buttons may control zoom level by sliding the virtual rotatable view in the respective direction. In another example, a navigation joystick as found on many portable devices may be used in the same way. In still another example, the method according to the invention particularly well supports control by means of a touch sensitive display. A strong point of the sliding wheel in combination with a touch sensitive screen lies in the fact, that here the sensitivity to user input is naturally scaled in complete proportionality with the zoom level of the display. At the same time the geometric disposition allows a user to additionally dose the strength of her/his input control in a natural way by applying turning moments at different zones of the screen, since grabbing a wheel closer to its axis of rotation allows for stronger acceleration while touching further away from the axis facilitates finer control.

Preferably, in the method according to the invention each of the groups is displayed as a circle segment of the rotatable view. Also, each single data preferably is displayed as a segment of the segment of its corresponding group. Like this, for a discrete data set, i.e. a list of data, the virtual helix of the virtual rotatable view or the virtual circular disk of the virtual rotatable view, respectively, is segmented into pie slices. This comparably simple geometric disposition allows angular zooming by sliding a constant size window section closer to or further away from the center of the virtual rotatable view. Thereby, the angle covered by the window can increase when the latter approaches the center.

In a preferred embodiment, the method according to the invention further comprises the steps of obtaining sorted subgroups of the set of data according to a predefined subcriteria and sliding the rotatable view to display single subgroups when the predefined slide signal is detected on the control unit. Also, each of the subgroups preferably is displayed as a segment of the segment of its corresponding group and each single data is displayed as a segment of the segment of its corresponding subgroup. Like this, it is further possible to divide the rotational data layout into concentric zones consisting of "data slices" of different angular width. By using wider slices closer to the center of the distribution and finer ones in outer peripheral areas a hierarchic organization of a data set can be represented geometrically. Moreover, such a concentric geometric disposition is in direct accordance with the above-described idea of zooming in and out by horizontally sliding a fixed-size window section. When the distance of window section and center is decreased, i.e. the virtual rotatable view is zoomed out, higher hierarchic levels can be reached. In contrast to existing metaphors of data navigation a transition between different hierarchy levels is here achieved by a seamless sliding movement of the virtual rotatable view or "data wheel", respectively. This fact can be crucial for forming the basis for user control by means of homogeneous, seamless input signals or gestures.

Preferably, in the method according to the invention the screen and the control unit are a touch sensitive screen, the predefined turn signal is an essentially circular or essentially vertical touch movement on the touch sensitive screen and the predefined slide signal is an essentially horizontal touch movement on the touch sensitive screen. Essentially circular touch movement in this context relates to a movement of a finger or the like on the screen which is more or less of circular shape such that a user can conveniently induce a rotational movement of the virtual rotatable view. Essentially vertical touch movement in this context relates to a movement of a finger or the like from top to bottom over the screen or vice versa when the user applies the screen in its intended position such that a user can conveniently induce a rotational movement of the virtual rotatable view. Essentially horizontal touch movement in this context relates to a movement from right to left over the screen or vice versa when the user applies the screen in its intended position and alignment. Such vertical or horizontal touch movements can be detected anywhere on the screen or in a predefined section of the screen, particularly for example on the virtual rotatable view itself or in top or in bottom region of the screen outside the virtual rotatable view. By the means of such a touch sensitive screen as control unit and screen convenient fast state-of-the-art navigation and access of data of comparably large data sets is possible.

As mentioned above, the virtual rotatable view can be a virtual circular disk or a virtual helix. The virtual circular disk allows for a comparably simple implementation of the method according to the invention. However, the amount of data of the data set still allowing a useful display by means of a virtual circular disk as the virtual rotatable view depends on the rotation of the dimensions of the window and the distance of the data from the center. If the quotient of distance *d* of window and center and the window's height h and width *w* is comparably large, e.g. d/h, *d*/*w* > 100, the appearance of data entries is basically identical to a section of a vertically aligned list. This observation leads to an upper limit of the window distance *d* - i.e. the usable virtual circular disk radius - if one wants the virtual circular disk metaphor to be easily perceived by the user at any moment of data navigation. A maximum usable virtual circular disk radius in turn is connected to a maximum number of data or items which may be displayed. This limit may however be overcome by expanding the virtual circular disk into the virtual helix as mentioned above. A list of entries is here distributed cyclically on an infinite plane helix structure. All general principles as well as the dynamic windowed user view are identical to the above-described case of a virtual circular disk or wheel, respectively. The only practical difference is given by the fact that more than one 360° turn is needed to scroll through the entire data set.

Preferably, an acoustical signal is induced on an acoustic output unit of the electronic device when the virtual rotatable view is rotated to display different data, groups or subgroups. Like this, the momentary zoom level which is also rejected in the mutual angles of locally visible data slices can additionally be displayed acoustically. For example, by producing a short "click-like" sound for every step-wise advance in a set of discrete data (a list of entries) the current angular velocity is being reflected in the acoustic feedback. The audible result can range from individually identifiable clicks for very slow turning movements to a pitched sound for very fast angular velocity. This extreme temporal sensitivity and range of human auditory perception as compared to visual perception may be exploited to improve the performance of the user interface.

Another aspect of the invention relates to a computer program having means for performing the method described above. With such a computer program the method according to the invention can be efficiently and easily implemented in an electronic device. A further other aspect of the invention relates to an electronic device comprising a processor, a control unit, a memory and a screen, wherein the device is arranged for performing the method according to the invention.

These and other aspects of the invention will be apparent from and elucidated with reference to the embodiment(s) described hereinafter.

### Brief Description of the Drawings

The method according to the invention, the computer program according to the invention and the electronic device according to the invention are described in more detail hereinbelow by way of an exemplary embodiment and with reference to the attached drawings, in which:
- Fig. 1: shows a schematic view of a virtual circular disk as a first embodiment of a virtual rotatable view;
- Fig. 2: shows a schematic view of a virtual circular disk as a second embodiment of a virtual rotatable view;
- Fig. 3: shows a schematic view of a virtual helix as a third embodiment of a virtual rotatable view
- Fig. 4: shows a schematic screenshot view of a first screen display of the virtual helix from Fig. 3;
- Fig. 5: shows a schematic screenshot view of a second screen display of the virtual helix from Fig. 3;
- Fig. 6: shows a schematic screenshot view of a third screen display of the virtual helix from Fig. 3; and
- Fig. 7: shows a mobile electronic device displaying the virtual helix from Fig. 3 on its touch sensitive screen.

### Mode(s) for Carrying Out the Invention

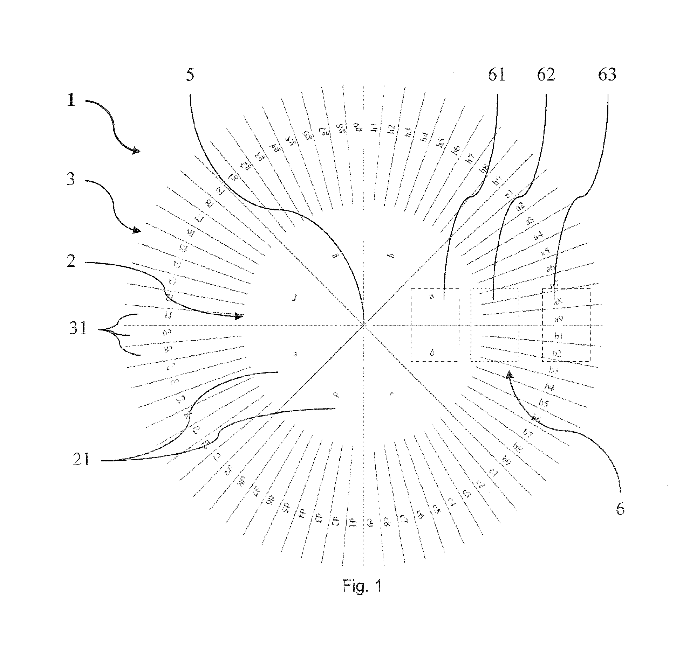

in Fig. 1 a schematic view of a first embodiment of a virtual rotatable view is shown wherein the virtual rotatable view is a virtual circular disk 1. The disk 1 comprises a center 5, a circular inner group section 2 and an outer ring-shaped single data section or item section 3, respectively. The group section 2 comprises six group circle segments 21 of the same size and shape in a pie piece manner. Each group circle segment 21 represents a specific group of single data or items, respectively. For example, the six group circle segments of Fig. 1 represent the letters a to h in an alphabetical sort order. The item section 3 comprises a plurality of item circle segments 31 of the same size and shape wherein each group circle segment 21 is divided in nine item circle segments 31. Each item circle segment 31 represents a specific single data or item, respectively. For example, the nine item circle segments 31 of each of the group circle segments 21 of Fig. 1 represent the numbers 1 to 9 in a size sort order.

According to the method of the invention, a section of the disk 1 is displayed on a screen of an electronic device at a time. As examples of display sections 6, a first display section 61 is visible on the screen to display the groups of the set of data. Therefore, the first display section 61 covers a portion of the group section 2, e.g. the groups "a" and "b". By providing a turn signal to the electronic device, a user may induce a rotational movement of the disk 1 such that groups visible in the first display section 61 change. By providing a slide signal to the electronic device a user may shift the visible display section via a second display section 62 to a third display section 63 which covers a portion of the item section 3, e.g. the items "a8" to "b2". Again, by providing a turn signal to the electronic device, a user may induce a rotational movement of the disk 1 such that items visible in the third display section 63 change.

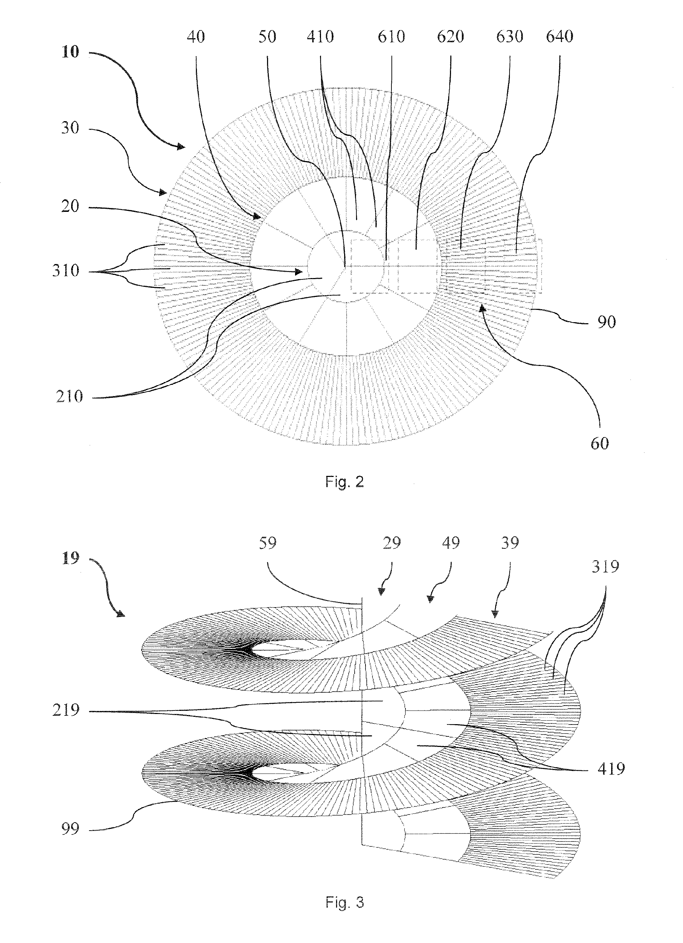

Fig. 2 shows a schematic view of a second embodiment of a virtual rotatable view wherein the virtual rotatable view is a virtual circular disk 10. The disk 10 comprises a center 50, a periphery 90, a circular inner group section 20, an outer ring-shaped single data section or item section 30, respectively, and an inner ring-shaped subgroup section 40 being arranged in between the group section 20 and the item section 30. The group section 20 comprises three group circle segments 210 of the same size and shape in a pie piece manner. Each group circle segment 210 represents a specific group of single data or items, respectively. The subgroup section 40 comprises a plurality of subgroup circle segments 410 of the same size and shape wherein each group circle segment 210 is divided in four subgroup circle segments 410. Each subgroup circle segment 410 represents a specific subgroup of items within the corresponding group. The item section 30 comprises a plurality of item circle segments 310 of the same size and shape wherein each subgroup circle segment 410 is divided in a plurality of item circle segments 310. Each item circle segment 310 represents a specific item.

According to the method of the invention, a section of the disk 10 is displayed on a screen of an electronic device at a time. As examples of display sections 60, a first display section 610 is visible on the screen to display the groups of the set of data. For this purpose, the first display section 610 covers a portion of the group section 20 and additionally a smaller portion of corresponding neighbouring subgroups. By providing a turn signal to the electronic device, a user may induce a rotational movement of the disk 10 such that groups visible in the first display section 610 change. By providing a slide signal to the electronic device a user may shift or zoom the visible display section to a second display section 620 which covers a portion of the subgroup section 40. Again, by providing a turn signal to the electronic device, a user may induce a rotational movement of the disk 10 such that subgroups visible in the second display section 620 change. By providing a slide signal to the electronic device a user may shift or zoom the visible display section via a third display section 630 to a fourth display section 640 which covers a portion of the item section 30. Again, by providing a turn signal to the electronic device, a user may induce a rotational movement of the disk 10 such that items visible in the fourth display section 640 change.

In Fig. 3 a schematic view of a portion of a third embodiment of a virtual rotatable view is shown wherein the virtual rotatable view is a virtual helix 19 being wound in a winding stairs fashion around a center 59. The helix 19 comprises a periphery 99, a inner group section 29, an outer single data section or item section 39, respectively, and a subgroup section 49 being arranged in between the group section 29 and the item section 39. The group section 29 comprises a plurality of group segments 219 of which represents a specific group of single data or items, respectively. The subgroup section 49 comprises a plurality of subgroup segments 419 wherein each group segment 219 is divided in a plurality of subgroup segments 419. Each subgroup segment 419 represents a specific subgroup of items within the corresponding group. The item section 39 comprises a plurality of item segments 319 of the same size and shape wherein each subgroup segment 419 is divided in a plurality of item segments 319. Each item segment 319 represents a specific item.

The following applies to the rest of this description. If, in order to clarify the drawings, a figure contains reference signs which are not explained in the directly associated part of the description, then it is referred to previous description sections.

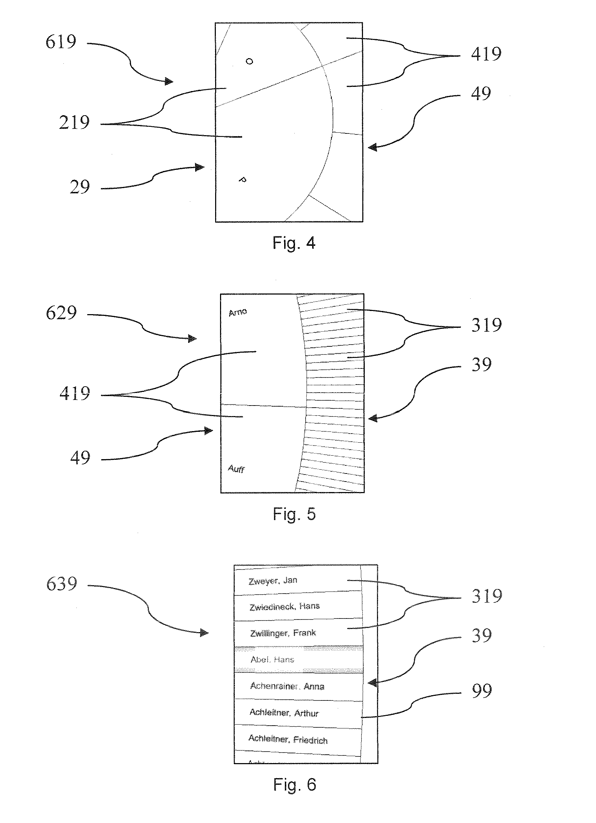

Fig. 4, Fig. 5 and Fig. 6 show a first display section 619, a third display section 639 and a second display section 629 being arranged between the first display section 619 and the third display section 639. As of display sections, the first display section 619 is visible on the screen to display the groups of the set of data. For this purpose, the first display section 619 covers a portion of the group section 29 and additionally a smaller portion of corresponding neighbouring subgroups. By providing a turn signal to the electronic device, a user may induce a rotational movement of the helix 19 such that groups visible in the first display section 619 change. By providing a slide signal to the electronic device a user may shift or zoom the visible display section to the second display section 629 which covers a portion of the subgroup section 49. Again, by providing a turn signal to the electronic device, a user may induce a rotational movement of the helix 19 such that subgroups visible in the second display section 629 change. By providing a slide signal to the electronic device a user may shift or zoom the visible display section to the third display section 649 which covers a portion of the item section 39. Again, by providing a turn signal to the electronic device, a user may induce a rotational movement of the helix 19 such that items visible in the third display section 639 change.

By the way of an example, the method according to the invention can be applied to an digital address book as set of data wherein the names listed in the address book are alphabetical grouped and sorted. As shown in the first display section 619 of Fig. 4 the groups "O" and "P" in the group section 29 of the helix 19 are visible on the screen wherein by means of a turn signal the helix 19 may rotate and the visible groups may change. As shown in the second display section 629 of Fig. 5 the subgroups "Arno" and "Auff" in the subgroup section 49 of the helix 19 are visible on the wherein again by means of a turn signal the helix 19 may and the visible subgroups may change. These visible subgroups are associated to group "A" of the group section 29 of the disk 19. As shown in the third display section 639 of Fig. 6 the item "Zweyer, Jan" to "Achleitner, Friedrich" in the item section 39 of the helix 19 are visible on the screen wherein again by means of a turn signal the helix 19 may rotate and the visible items may change.

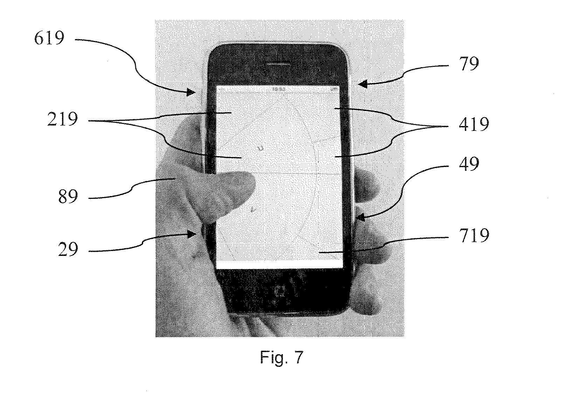

In Fig. 7 an electronic device 79 is shown running a computer program for performing the method according to the invention described above wherein the first display section 619 is visible on its screen 719. The electronic device is a handheld mobile device 79 which is controlled by a hand 89 of a user through its touch sensitive screen 719. This may provide the advantage that the device's dimensions those of its display only marginally, or vice versa, the full size of the device may be used for graphical display. Generally, it is of advantage if a mobile device may be held and a computer program be controlled effectively with one single hand 89. This latter goal is hard to achieve with an alphanumeric keyboard being displayed and operated on a screen. A natural usage of such a touch sensitive screen 719 is to move elements hereon by grabbing and sliding screen content in a way as one would, e.g., do with a sheet of paper on a table. This metaphor is also used in other existing devices, e.g. for navigation in electronically stored maps. In accordance with this natural approach, the method according to the invention is implemented in the device 79 having the touch sensitive screen 719 such that large sets of data may be effectively explored while holding and operating the device 79 with one hand.

The screen 719 of the handheld device 79 has a width of about 5 cm and a height of about 7,5 cm when the device 79 is in an upright position. Such screen 719 dimensions are typical for handheld devices but of course the described implementation can be adapted to screens of other sizes. The device 79 uses control mainly through touch input on the screen 719 wherein the implementation benefits from "multitouch input", i.e. the ability to recognize and process several zones of fingers touching the screen 719. However, the method according to the invention would also perfectly work with single touch support only.

Visually, for the given screen 719 dimensions the helix 19 can still be easily recognized if the distance of the display visible on the screen 719 and the center 59 is below about 60 cm. For distances much larger than this value, visible display sections of angular slices tend to get indistinguishable from simple horizontal bars. Fig. 4, Fig. 5 and Fig. 6 show screenshots of the user view in this example implementation with the Fig. 6 showing the highest zoom level at the maximum distance, i.e. at the maximum radius of the helix 19. A maximum radius of about 65 cm corresponds to a perimeter length of 2π · 65 cm ≈ 408 cm. If one entry of the data set is to occupy a space of ca. 1 cm on the screen 719 (see, e.g., Fig. 7), accordingly about 408 items may be contained in one circulation of a wheel or a helix. In order to display a data set with fewer items under the given constraints a virtual rotatable view being a disk would be sufficient. However, in order to display a data set with more than this number of items the virtual rotatable view is the helix 19 rather than a circular disk. E.g., Fig. 4, Fig. 5 and Fig. 6 show screenshots of an implementation of a lexicon or address book with 4'000 or more entries or items, respectively. As understood from the rough calculations above this number of items is fitted onto about ten circulations of the helix 19. The highest hierarchy level towards the center 59 of rotation, i.e. the group section 29, holds the alphabetic categories corresponding to items' first letters. In the subgroup section 49 of the helix 19 a subcategory has been introduced such that each class of this hierarchy level encompasses about thirty to forty names and is characterized by the initial four-letter sequence of the first name in this subgroup (see Fig. 5). This hierarchy of categories or groups and subgroups, respectively, defined by such a predefined criteria and/or such a predefined subcriteria, represents just one possibility chosen for quick implementation and can easily be adapted for concrete practical applications. Another corresponding example would be the organization of music titles according to "genre" - "artist" - "album".

According to the "grab and slide" principle mentioned above, when a user touches the screen 719 the helix 19 turning movement is constrained to follow the finger position of the user's hand 89. After releasing the touch the helix 19 continues to rotate with some inertia. The exact movement behavior may be implemented on the basis of a physical model, such as the helix 19 behaving as rigid body with a moment of inertia being free to rotate around its axis of symmetry, i.e. the center 59. Such a physical model may include of friction so the turning movement after release of touch events decelerates and finally comes to rest. Also for the "grabbing contact" of the finger a comparably simple physical model consisting of a virtual massless spring and damping element is used in this implementation, but these details only serve to optimize the "feel" of the interface and are not crucial for the general workings and practicability of the method according to the invention. This turning behaviour may be roughly summarized in simple words by the catchword "wheel of fortune".

For the horizontal movement responsible for sliding or zooming, respectively, two general strategies may implemented. For explicit manual control of zoom level or slid level, respectively, corresponding to the just described turning movement the helix 19 can explicitly be moved in horizontal direction by a user's finger movements. In this case the helix 19 may be realized as a virtual rigid body with two degrees of freedom, one of rotation around its axis of symmetry, i.e. center 59, and one of horizontal sliding with the center 59 moving along a horizontal rail. Again, an element of friction may serve to attenuate the horizontal movement after release of touch events.

For automatic control of zoom level or slid level, respectively, the zoom level, i.e. the horizontal helix 19 position, may also be adjusted automatically in dependence of the turning movement. In this case only the turning movement is controlled directly by the user, e.g. following the same approach as above with finger movements on a touch sensitive screen. For such automatic zooming a comparably simple approach is to choose the distance d of center 59 and screen 719 as a function of angular velocity ω only: *d = d(ω).* The function d(ω) should be chosen such that the velocity of elements visible on the screen 719 possibly always lies within a certain range, such that these moving elements can be clearly perceived by human eye. Also, when applying touch control following the "grab and slide" principle one must note that the velocity of elements on the screen is directly related to typical velocities of finger movements. A comparably simple way to deal with these constraints could be to demand that in any moment any element at one certain position on the screen should have a constant chosen velocity v as long as the helix 19 is not at rest. If *d* is let to denote precisely the momentary distance of this specific position from the center 59 the relationship between the velocity of an element located here and the wheel's angular velocity is given by *v* = *d*(ω) · ω. This is equivalent to *d*(ω) = *v*/ω for the distance, i.e. the zoom level, as a function of angular velocity. Of this dependence should be limited to d(ω) ≤ *dₘₐₓ* since the value *v* /ω converges to infinity for angular velocities ω approaching 0, i.e. the helix 19 coming to rest.

This function *d*(ω) = *v* /ω for ω *v*/*dₘₐₓ* and *d(ω) = dₘₐₓ* otherwise is a comparably simple choice to guarantee good readability at any angular velocity. In the case of touch control as described above, it however serves as a rule of orientation only, for reasons of additional considerations. Such additional considerations may concern that when directly applying the above functional dependency the distance value d(*ω*) will undergo rapid changes whenever the angular velocity *ω* is changed abruptly. This easily happens during user touch. Such rapid "jumps" of zoom level affect readability and control behaviour in general. This problem may be alleviated by some kind of tow-pass filtering of the values of angular velocity, an approach which can be indeed applied together with more complicated enhancements in a certain variation of the example implementation. Other such additional considerations may concern that the written items marking elements at the various hierarchical levels of the data set (such as, e.g., names/titles on the lowest level, initial letters at the highest level of the hierarchy) are placed at certain radial zones of the helix 19 each characterized by one radius "of preferred interest" *rₘ, m = 1*, ..., *numₗₑᵥₑₗₛ.* Between these radial zones of written entries lie "empty" zones without written identifiers. Of course it can be desirable for the zooming behaviour to generally rest at the zones of interest and fade between these zones "smoothly but rather quickly". Such a zooming behaviour can be achieved by defining a function *d* = *d*(ω) in the following way: for each radius of preferred interest *dₘ := rₘ, m = 1,..., numₗₑᵥₑₗₛ,* a characteristic angular velocity ωₘ *:= v*/*dₘ* is assigned as for the simple rule derived above, and the function *d*(ω) is defined such that it is constant in the vicinity of these characteristic angular velocities, *d(ω):= dₘ* for *ω* ≈ *ωₘ*. Finer details of how to choose the width of the "zones of vicinity" around characteristic angular velocities *ω*ₘ and how to connect the constant segments of the function d(*ω*) are not crucial for the general practicability of the method according to the invention. For the present implementation the widths of the zones of vicinity are chosen to be proportional to the according angular velocity *ω*ₘ and the function *d*(*ω*) is chosen to be piecewise linear in the logarithm of the angular velocity *log(ω).*

Finally, for the zooming behaviour elements of inertia and friction can be used in order to filter the sliding movement. The value d(*ω*) is thus not directly used as the distance value but as a horizontal position of an "anchor point" to which the axis of rotation is connected by a virtual massless spring with damping. Such a physical model in its digital implementation amounts to a kind of low-pass filtering of the temporal trajectory of the horizontal wheel position. Again, exact details of these elements, such as, e.g., the quantitative nature of the friction element, can be chosen in different ways in order to optimize behaviour of zooming and control. These details are however not crucial for the general practicability of the method according to the invention.

Another typical situation where the method according to the invention may be advantageous is the one of navigation by means of a very small remote control allowing for use of only a small number of control buttons. A simple pair of buttons, "up" and "down", may be used to control the scrolling behaviour, i.e. the turning movement of the virtual rotatable view. For the reaction towards button press different approaches exist and may be conceived of, such as the buttons acting in ways as a "gas pedal" and "brake". Again these specific details are not crucial for the potential of the general method according to the invention. Just in the same way as with control of the turning movement, zooming may be performed by means of a pair of "left" and "right" buttons which naturally control the horizontal position of the virtual rotatable view. Further, zoom level may also be adjusted automatically in a way as described in some detail above for the situation of a touch sensitive screen, and again many combinations of manual and automatic zoom are conceivable.

The techniques of using the method according to the invention as described for a "cross" of "up/down/left/right" buttons may be directly exploited also with a small joystick as found on many mobile devices. Generally a joystick has the additional advantage of allowing to point in any direction within the full 360° range so that simultaneous scrolling and zooming is facilitated.

While the invention has been illustrated and described in detail in the drawings and foregoing description, such illustration and description are to be considered illustrative or exemplary and not restrictive. It will be understood that changes and modifications may be made by those of ordinary skill within the scope and spirit of the following claims. In particular, the present invention covers further embodiments with any combination of features from different embodiments described above and below. For example, it is possible to operate the invention in an embodiment wherein:
- many combinations of the described general zooming strategies, manual and automatic, may be conceived. The horizontal virtual rotatable view position may be controlled manually with the additional effect of an automatically adjusted horizontal "attractor". An example of such a behaviour may consist of the virtual rotatable view showing more or less "resistance" to manual adjustment when grabbing and sliding towards or away from a preferred zoom level, i.e. the horizontal position of the virtual rotatable view
- the set of data may also be structured in a plurality of hierarchical subgroup levels. Thereby, the virtual rotatable view comprises a plurality of neighbouring subgroup sections.

The invention also covers all further features shown in the Figs. individually although they may not have been described in the afore or following description.

Furthermore, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

## Claims

1. Method for navigating and accessing a set of data being stored in a memory of an electronic device (79) which has a screen (719) and a control unit (719), **characterized by** the steps of:
obtaining sorted groups of the set of data according to a predefined criteria;
providing a virtual rotatable view (1; 10; 19) having the groups arranged around its center (5; 50; 59) and having the single data arranged along its periphery (90; 99) in correspondence with the groups;
displaying a section (61; 610; 619) of the virtual rotatable view (1; 10; 19) near its center (5; 50; 59) on the screen (719) wherein at least one group is visible on the screen (719);
turning the virtual rotatable view (1; 10; 19) when a predefined turn signal is detected on the control unit (719): and
sliding the virtual view (1; 10; 19) into a peripheral direction to display single data of the set of data.

2. The method according to claim 1, wherein the virtual rotatable view (1; 10; 19) is a virtual circular disk (1; 10).

3. The method according to claim 1, wherein the virtual rotatable view (1; 10; 19) is a virtual helix (19).

4. The method according to any one of the preceding claims, wherein the sliding of the virtual rotatable view (1; 10; 19) into a peripheral direction is inducible by a predefined slide signal being detected on the control unit (719).

5. The method according to any one of the preceding claims, wherein each of the groups is displayed as a circle segments (21; 210; 219) of the virtual rotatable view (1; 10; 19).

6. The method according to claim 5, wherein each single data is displayed as a segment (31; 310; 319) of the segment (21, 210, 219) of its corresponding group.

7. The method according to any one of the preceding claims, further comprising the steps of:
obtaining sorted subgroups of the set of data according to a predefined subcriteria;
and
sliding the virtual rotatable view (1; 10; 19) to display single subgroups.

8. The method according to claim 7, wherein each of the subgroups is displayed as a segment (410; 419) of the segment (21; 210; 219) of its corresponding group and each single data is displayed as a segment (31; 310; 319) of the segment (410; 419) of its corresponding subgroup.

9. The method according to any on of the preceding claim, wherein the screen and the control unit are a touch sensitive screen (719), the predefined turn signal is an essentially circular or essentially vertical touch movement on the touch sensitive screen (719) and the predefined slide signal is an essentially horizontal touch movement on the touch sensitive screen (719).

10. The method according to any on of the preceding claims, wherein an acoustical signal is induced on an acoustic output unit of the electronic device (79) when the virtual rotatable view (1; 10; 19) is rotated to display different data, groups or subgroups.

11. Computer program having means for performing the method according to any one of the preceding claims.

12. Electronic device (79) comprising a processor, a control unit (719), a memory and a screen (719), wherein the device (79) is arranged for performing the method according to any one of claim 1 to 10.
